# EUROPEAN PATENT APPLICATION

(11) **EP 4 711 503 A2**
(43) Date of publication of application: **18.03.2026**
(21) Application number: 25191195.4
(22) Date of filing: 23.07.2025
(51) Int. Cl.: C25B 9/73, C25B 9/67, C25B 9/63

(54) **ELECTROCHEMICAL CELL STACK AND ELECTROCHEMICAL DEVICE**

(30) Priority: 11.09.2024 JP 2024157323; 13.06.2025 JP 2025099530
(71) Applicant: Kabushiki Kaisha Toshiba, Tokyo 105-0023 (JP); Toshiba Energy Systems & Solutions Corporation, Saiwai-ku Kawasaki-shi Kanagawa (JP)
(72) Inventor: ONO, Takahiro, Kawasaki-shi, Kanagawa (JP); YOSHINO, Masato, Kawasaki-shi, Kanagawa (JP); MATSUNAGA, Kentaro, Kawasaki-shi, Kanagawa (JP); OSADA, Norikazu, Kawasaki-shi, Kanagawa (JP); WATANABE, Hisao, Kawasaki-shi, Kanagawa (JP)
(74) Representative: Hoffmann Eitle

(57) **Abstract**

An electrochemical cell stack includes: a stack including electrochemical cells; a first clamping plate provided in contact with the stack; and a heat conduction member provided in contact with the first clamping plate. The heat conduction member is lower in heat conductivity than the first clamping plate under an operating temperature range of the electrochemical cell stack.

## Description

### FIELD

Embodiments relate to an electrochemical cell stack and an electrochemical device.

### BACKGROUND

Electrochemical cells such as solid oxide electrochemical cells are under development for use as fuel cells for power generation, electrolysis devices for hydrogen production, and power storage systems combining these. Owing to the use of a solid oxide as an electrolyte, a solid oxide electrochemical cell operates at high operating temperatures of not lower than 600°C nor higher than 1000°C and achieves a high reaction rate without using an expensive precious metal catalyst. Therefore, when operating as a solid oxide fuel cell (SOFC), it can have a high power generation efficiency, and when operating as a solid oxide electrolysis cell (SOEC), it can produce hydrogen highly efficiently at a low electrolysis voltage.

### BRIEF DESCRIPTION OF THE DRAWINGS

FIG. 1 is a schematic view illustrating a structure example of an electrochemical cell stack.
FIG. 2 is a schematic view illustrating a structure example of a stack.
FIG. 3 is a schematic view for explaining thermal deformation.
FIG. 4 is a schematic view for explaining a first embodiment of an electrolysis device.
FIG. 5 is a schematic view for explaining a second embodiment of the electrolysis device.
FIG. 6 is a schematic view illustrating a structure example of the electrolysis device.
FIG. 7 is a schematic view for explaining a third embodiment of the electrolysis device.
FIG. 8 is a schematic view illustrating the planar shapes of sealing members.
FIG. 9 is a schematic view illustrating a modification example of the third embodiment.
FIG. 10 is a schematic view illustrating a modification example of the third embodiment.
FIG. 11 is a schematic view for explaining a fourth embodiment of the electrolysis device.

### DETAILED DESCRIPTION

An electrochemical cell stack of an embodiment includes: a stack including electrochemical cells; a first clamping plate provided in contact with the stack; and a heat conduction member provided in contact with the first clamping plate. The heat conduction member is lower in heat conductivity than the first clamping plate under an operating temperature range of the electrochemical cell stack.

Embodiments will be hereinafter described with reference to the drawings. In the embodiments below, substantially the same components are denoted by the same reference signs and a description thereof may be partly omitted. The drawings are schematic, and the relation between thickness and planar dimensions, the thickness ratio among parts, and so on may differ from actual ones.

It should be noted that, in this specification, "connection" is not limited to direct connection but may include indirect connection unless otherwise specified.

### (Structure Example of Electrolysis Device)

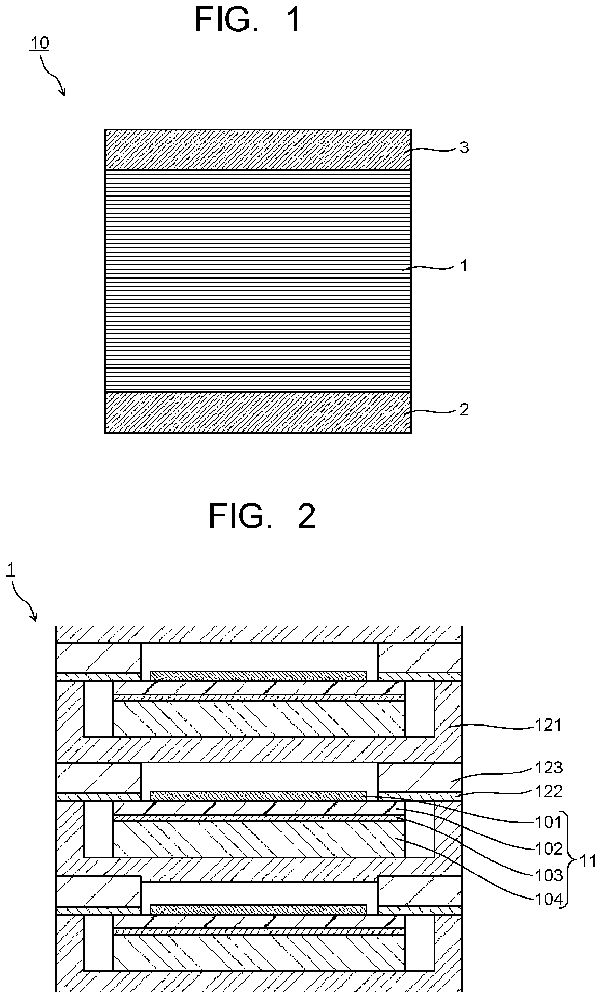

FIG. 1 is a schematic view illustrating a structure example of an electrolysis cell stack in an electrolysis device, as an example of an electrochemical cell stack in an electrochemical device. FIG. 1 is a schematic view illustrating a structure example of an electrolysis cell stack 10.

The electrolysis cell stack 10 is capable of causing an electrolytic reaction using a gas supplied from the outside of the electrolysis cell stack 10 (supply gas) and discharging a gas produced by the electrolytic reaction (produced gas). The supply gas is supplied from a gas supply source outside the electrolysis cell stack 10 and contains, for example, water vapor, a carbon dioxide gas, or a hydrogen gas. The produced gas contains, for example, a carbon monoxide gas or a hydrogen gas. The electrolysis cell stack 10 has a stack 1, a lower clamping plate 2, and an upper clamping plate 3.

The stack 1 is a solid oxide electrochemical stack having solid oxide electrochemical cells 11. The stack 1 is provided between the lower clamping plate 2 and the upper clamping plate 3. The lower clamping plate 2 is provided on, for example, the lower end of the stack 1. The upper clamping plate 3 is provided on, for example, the upper end of the stack 1. The lower clamping plate 2 and the upper clamping plate 3 are, for example, metal plates. The metal plates are conductors. Examples of the metal plate include those of stainless steel (SUS) and a nickel (Ni) alloy.

FIG. 2 is a schematic view illustrating a structure example of the stack 1. The stack 1 has the solid oxide electrochemical cells 11. FIG. 2 illustrates a planar stack having the solid oxide electrochemical cells 11. The stack 1 is not limited to the planar stack, and may be, for example, a tubular stack. The solid oxide electrochemical cells 11 are planar electrochemical cells and are fuel electrode-supported cells. The solid oxide electrochemical cells 11 are connected to a power source that is capable of supplying voltage or current for the electrolytic reaction, for instance.

The solid oxide electrochemical cells 11 are capable of operating at high temperatures, and the electrolytic reaction takes place at a temperature of, for example, not lower than 600°C nor higher than 1000°C. The solid oxide electrochemical cells 11 may be provided in, for example, a heater and adjusted in temperature by the heater for heating the solid oxide electrochemical cells 11. The solid oxide electrochemical cells 11 may be provided in an electric furnace that is capable of controlling the temperature of the solid oxide electrochemical cells 11.

The solid oxide electrochemical cells 11 are stacked in sequence. The solid oxide electrochemical cells 11 each have an air electrode 101, an electrolyte 102, a fuel electrode 103, and a support 104.

The electrolytic reaction takes place in the electrolysis cell stack 10 as follows, for instance. A gas such as a carbon dioxide gas, water vapor, or a hydrogen gas is supplied to the fuel electrodes 103. The electrolytic reaction in the fuel electrodes 103 can produce, for example, a hydrogen gas from the water vapor and can produce a carbon monoxide gas from the carbon dioxide gas. From the fuel electrodes 103, a gas such as a carbon dioxide gas, water vapor, a hydrogen gas, or a monoxide gas is discharged.

A gas such as air is supplied to the air electrodes 101. The purpose of the air supply is, for example, to purge oxygen produced during the electrolysis. The electrolytic reaction in the air electrodes 101 can produce oxygen. From the air electrodes 101, air higher in oxygen concentration than the atmosphere is discharged.

The air electrodes 101 each have a porous electrical conductor, for instance. Examples of the porous electrical conductor include perovskite oxide.

The air electrodes 101 each further have a catalyst to promote the electrolytic reaction for producing the produced gas. The catalyst contains at least one element out of, for example, platinum (Pt), ruthenium(Ru), cerium (Ce), lanthanum (La), cobalt (Co), nickel (Ni), aluminum (Al), and copper (Cu). For example, the catalyst is carried on the surface of the electrical conductor. The catalyst may form a catalyst layer on the surface of the electrical conductor.

The electrolytes 102 each have, for example, an ion conductor that does not conduct electricity. Examples of the ion conductor include solid oxides such as shaped bodies of stabilized zirconia, perovskite oxide, and ceria-based solid solution.

The fuel electrodes 103 each have, for example, a porous electrical conductor. Examples of the porous electrical conductor include a mixed sintered body (cermet) composed of metal and solid oxide. Examples of the mixed sintered body include yttria-stabilized zirconia and scandia-stabilized zirconia.

In the electrolysis cell stack 10, the atmospheres of the adjacent solid oxide electrochemical cells 11 can be isolated by a separator 121, for instance. Further, the atmospheres of the fuel electrode 103 and the air electrode 101 in the same solid oxide electrochemical cell 11 can be isolated by a partition plate 122 provided on the dense electrolyte 102 of the solid oxide electrochemical cell 11. The solid oxide electrochemical stack may further have a sealant 123 in each gap between the partition plates 122 and the separators 121. The electrolysis cell stack 10 may further have, on outer peripheral parts of the solid oxide electrochemical cells 11, gas channels penetrating in the direction in which the solid oxide electrochemical cells 11 are stacked. One of the gas channels forms a channel for the source gases that are to be supplied to the fuel electrodes 103 and the air electrodes 101 and the reaction product gases produced by the fuel electrodes 103 and the air electrodes 101. Another of the gas channels is connected to, for example, a pipe.

To produce a lot of power or hydrogen, the solid oxide electrochemical cells 11 are stacked to form the electrolysis cell stack 10. For example, in the case of the planar electrolysis cell, planar electrolysis cells are stacked to form the electrolysis cell stack 10, different gases are supplied to the air electrode 101 and the fuel electrode 103 of each of the electrolysis cells, and the electrolysis cells can be electrically connectable in series.

The stack 1, the lower clamping plate 2, and the upper clamping plate 3 can be clamped by compression mechanisms (clamping tools) such as nut-bolt combinations or springs, for instance. The lower clamping plate 2 and the upper clamping plate 3 which are arranged on the top and bottom of the stack 1 give the electrolysis cell stack 10 a compressive force in the stacking direction and seal the electrolysis cell stack 10 to prevent, in particular, hydrogen produced by the electrolytic reaction from leaking to the outside of the electrolysis cell stack 10.

A system increased in capacity by the serial or parallel connection of the electrolysis cell stacks 10 is called a module. The electrolysis cell stacks 10 are arranged in the module. The supply gases to the air electrodes 101 and the fuel electrodes 103 pass in a heating furnace such as an electric furnace to be supplied into the electrolysis cell stacks 10 from pipes or the end parts of the electrolysis cell stacks 10.

In the case where the electrolysis cell stack 10 is operated not for power generation but for electrolysis, it is important to recover the produced hydrogen without leaking it to the outside of the electrolysis cell stack 10 or the electrolysis device.

For the gas supply and the gas discharge to/from the air electrodes 101 and the fuel electrodes 103, pipes or end-manifolds are usable. The electrolysis cell stack 10 is arranged on and fixed to a stand in the heating furnace, for instance. A chamber of the heating furnace is covered with a heat insulator, but in some cases, at least one place thereof penetrates the insulator to connect to the ground, and a non-negligible amount of heat is released to the ground through this place. The stack 1 is not easily affected by the heat release since a high-temperature gas flows therein. In the electrolysis cell stack 10, its end parts without any gas channels and its connection parts with other elements may have a temperature gradient during the operation of the electrolysis device. This temperature gradient may cause thermal deformation of the end parts of the electrolysis cell stack 10.

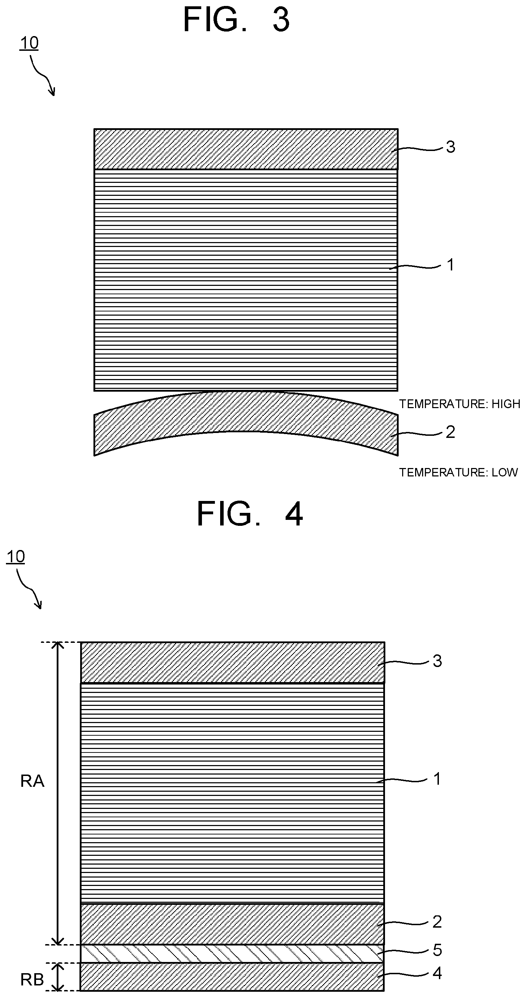

FIG. 3 is a schematic view for explaining the thermal deformation. During the operation of the electrolysis device, the temperature gradient is formed in the electrolysis cell stack 10, with its end part having a low temperature and its center part having a high temperature. Consequently, a member such as the clamping plate at the end part of the electrolysis cell stack 10 thermally deforms to project toward the stack 1. The stack 1 may also thermally deform, but the clamping plate more easily undergoes thermal deformation because it is thinner than the stack 1. Due to this thermal deformation, physical deformation that causes loss of flatness occurs between the center part and the end part of the electrolysis cell stack 10, or an opening force in the stacking direction from the center part to the end part is generated, which involves the possibility that a gap is formed in the electrolysis cell stack, leading to gas leakage from the electrolysis cell stack 10.

The electrolysis device of the embodiment, on the other hand, has a buffer structure connected to at least one of the lower clamping plate 2 and the upper clamping plate 3 of the electrolysis cell stack 10 to reduce the thermal deformation of the at least one clamping plate. Examples of the electrolysis cell stack 10 having the buffer structure will be further described below. Though the case of an electrolysis device will be described below, this is not restrictive, and in other electrochemical devices such as SOFC having an electrochemical cell stack in which, for example, a reverse electrolytic reaction to the electrolytic reaction in the electrolysis cell stack 10 takes place, it is also possible to obtain the same effects as those of a first embodiment to a fourth embodiment, which will be described later, by providing the same buffer structure as any of the buffer structures in the first embodiment to the fourth embodiment.

### (First Embodiment)

FIG. 4 is a schematic view for explaining the first embodiment of the electrolysis device. FIG. 4 illustrates an electrolysis cell stack 10. In the following, what are different from the electrolysis cell stack 10 illustrated in FIG. 1 will be described, and for the other parts, the description of FIG. 1 can be referred to as required.

The electrolysis cell stack 10 of the first embodiment further includes a clamping plate 4 and a heat conduction member 5 in addition to the constituent elements of the electrolysis cell stack 10 illustrated in FIG. 1.

The clamping plate 4 is provided opposite the stack 1 across the lower clamping plate 2, for instance. The clamping plate 4 is provided in contact with the heat conduction member 5. The clamping plate 4 is formed of a material usable for the lower clamping plate 2 and the upper clamping plate 3, for instance.

The heat conduction member 5 forms a buffer structure. The heat conduction member 5 is provided in contact with the lower clamping plate 2. For example, the heat conduction member 5 is arranged opposite the stack 1 across the lower clamping plate 2 and is in contact with the lower clamping plate 2. For example, the heat conduction member 5 is arranged between the lower clamping plate 2 and the clamping plate 4 and is in contact with the clamping plate 4. The arrangement is not limited to the above, and the heat conduction member 5 may be arranged opposite the stack 1 across the upper clamping plate 3 and provided in contact with the upper clamping plate 3. In this case, the clamping plate 4 is provided opposite the stack 1 across the upper clamping plate 3, and the heat conduction member 5 is arranged between the upper clamping plate 3 and the clamping plate 4 and is in contact with the clamping plate 4.

Under the operating temperature range of the electrolysis cell stack 10, the heat conductivity of the heat conduction member 5 is preferably lower than the heat conductivity of at least one of the lower clamping plate 2 and the upper clamping plate 3. The operating temperature range of the electrolysis cell stack 10 is not lower than 600°C nor higher than 1000°C, for instance. Under the operating temperature range of the electrolysis cell stack 10, the heat conductivity of each of the lower clamping plate 2 and the upper clamping plate 3 is, for example, not lower than 10 W/m·k nor higher than 50 W/m · k, and the heat conductivity of the heat conduction member 5 is, for example, not lower than 0 W/m · k nor higher than 5 W/m · k. Under the operating temperature range of the electrolysis cell stack 10, the heat conductivity of the heat conduction member 5 is preferably lower than the heat conductivity of the clamping plate 4. Under the operating temperature range of the electrolysis cell stack 10, the heat conductivity of the clamping plate 4 is, for example, not lower than 10 W/m · k nor higher than 50 W/m · k.

Preferably, the heat conduction member 5 not only has a low heat conductivity but also is formed of a material that can keep its flatness and strength under a high-temperature environment, and may be formed of, for example, a ceramic member or a mica member.

The stack 1, the lower clamping plate 2, the upper clamping plate 3, the clamping plate 4, and the heat conduction member 5 can be fixed by being coupled together with clamping tools (coupling tools) penetrating these constituent elements, for instance. Examples of the clamping tool include a bolt-nut combination and a spring.

Owing to the heat conduction member 5 arranged between the electrolysis cell stack 10 and at least one of the clamping plates, in the case where, for example, the supply gas is supplied from a gas supply source to the lower clamping plate 2 or the stack 1, a region RA, in the electrolysis cell stack 10, upper than the heat conduction member 5 is kept at a high temperature by the supply gas. On the other hand, a region RB, in the electrolysis cell stack 10, lower than the heat conduction member 5 has a temperature gradient due to the influence of the above-mentioned heat release, for instance. However, being located lower than the heat conduction member 5, the clamping plate 4 does not easily undergo thermal deformation and thus can maintain the clamping of the electrolysis cell stack 10. This can prevent a gap from being formed in the electrolysis cell stack 10 due to the thermal deformation, enabling a reduction in gas leakage from the electrolysis cell stack 10.

### (Second Embodiment)

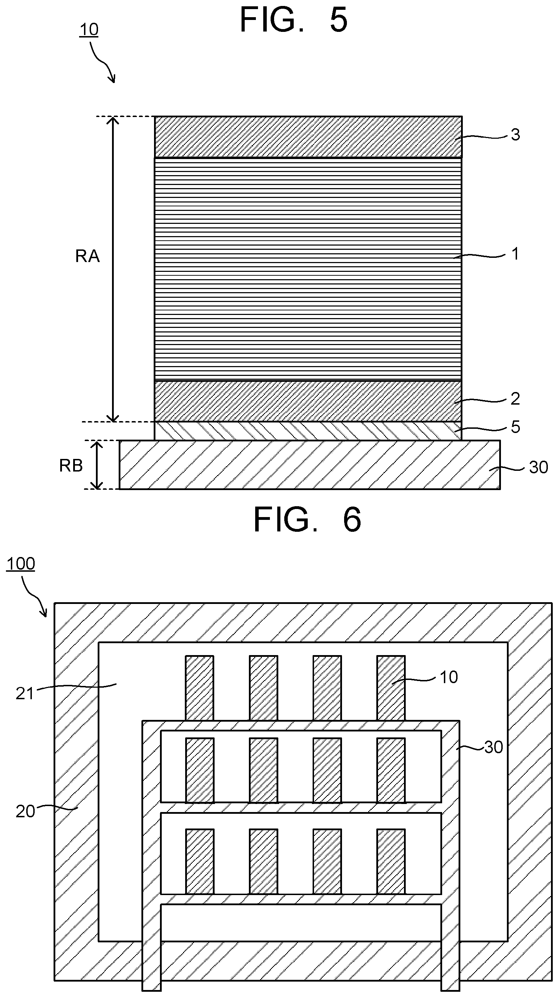

FIG. 5 is a schematic view for explaining the second embodiment of the electrolysis device. FIG. 5 illustrates an electrolysis cell stack 10. In the following, what are different from the electrolysis cell stack 10 illustrated in FIG. 1 will be described, and for the other parts, the description of FIG. 1 can be referred to as required.

The electrolysis cell stack 10 of the second embodiment further includes a heat conduction member 5 in addition to the configuration of the electrolysis cell stack 10 illustrated in FIG. 1.

The heat conduction member 5 forms a buffer structure. The heat conduction member 5 is provided in contact with the lower clamping plate 2. For example, the heat conduction member 5 is arranged opposite the stack 1 across the lower clamping plate 2 and is in contact with the lower clamping plate 2. The heat conduction member 5 is arranged, for example, between the lower clamping plate 2 and a stand 30 and is in contact with the stand 30. For the other description of the heat conduction member 5, the description of FIG.4 can be referred to as required.

FIG. 6 is a schematic view illustrating a structure example of an electrolysis device. FIG. 6 illustrates an electrolysis device 100.

The electrolysis device 100 has the electrolysis cell stacks 10, a heating furnace 20, and the stand 30.

FIG. 6 illustrates the electrolysis cell stacks 10. The electrolysis cell stacks 10 are arranged on at least one stand 30. The electrolysis cell stacks 10 may be connected to pipes so that the supply gas can be supplied to the electrolysis cell stacks 10 from the outside of the heating furnace 20 through one of the pipes and a gas channel, and the discharge gas can be discharged to the outside of the heating furnace 20 through another one of the pipes and a gas channel.

The heating furnace 20 has a chamber 21 housing the electrolysis cell stacks 10. Examples of the heating furnace 20 include an electric furnace. The heating furnace 20 is capable of adjusting the temperature of the electrolysis cell stacks 10. The heating furnace 20 is capable of adjusting the operating temperature range of the electrolysis cell stacks 10 to, for example, not lower than 600°C nor higher than 1000°C.

The stand 30 is arranged in the chamber 21. The stand 30 is provided to mount the electrolysis cell stacks 10 thereon. The stand 30 may have tiers of mounting surfaces where to mount the electrolysis cell stacks 10. The stand 30 may extend to the outside of the chamber 21. The stand 30 can be formed of, for example, a conductive material such as a metal material or an insulating material such as ceramic.

Owing to the heat conduction members 5 arranged between the electrolysis cell stacks 10 and the stand 30, in the case where, for example, the supply gas is supplied to the lower clamping plates 2 or the stacks 1 from the gas supply source, regions RA, in the electrolysis cell stacks 10, upper than the heat conduction members 5 are kept at a high temperature by the supply gas. On the other hand, regions RB, in the electrolysis cell stacks 10, lower than the heat conduction members 5 have a temperature gradient due to the influence of the above-mentioned heat release, for instance. However, being located lower than the heat conduction members 5, the stand 30 does not easily undergo thermal deformation and thus can keep the clamping of the electrolysis cell stacks 10. This can prevent a gap from being formed in the electrolysis cell stacks 10 due to the thermal deformation, enabling a reduction in gas leakage from the electrolysis cell stacks 10. Further, the second embodiment does not require the clamping plate 4, achieving a simple device configuration.

### (Third Embodiment)

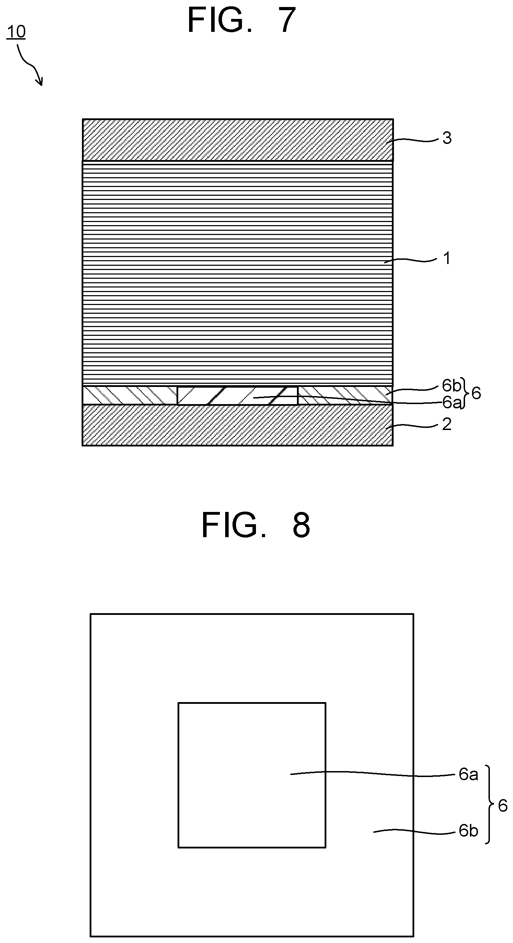

FIG. 7 is a schematic view for explaining the third embodiment of the electrolysis device. FIG. 7 illustrates an electrolysis cell stack 10. What are different from the electrolysis cell stack 10 illustrated in FIG. 1 will be described below, and for the other parts, the description of FIG. 1 can be referred to as required.

The electrolysis cell stack 10 of the third embodiment further includes sealing members 6.

The sealing members 6 form a buffer structure. The sealing members 6 are provided in contact with the end part of the stack 1. For example, the sealing members 6 are arranged between the stack 1 and the lower clamping plate 2 and is provided in contact with the lower clamping plate 2. The arrangement is not limited to this, and the sealing members 6 may be arranged opposite the lower clamping plate 2 across the stack 1 and provided in contact with the upper clamping plate 3. In this case, the sealing members 6 are arranged between the stack 1 and the upper clamping plate 3 and provided in contact with the upper clamping plate 3.

The sealing members 6 include a sealing member 6a and a sealing member 6b. The sealing members 6 have different coefficients of linear expansion under the operating temperature range of the electrolysis cell stack 10.

FIG. 8 is a schematic view illustrating the planar shapes of the sealing members 6. FIG. 8 illustrates the sealing member 6a and the sealing member 6b. The sealing member 6a and the sealing member 6b are provided on the same plane of, for example, the lower clamping plate 2.

The sealing member 6a is provided in contact with the lower clamping plate 2. The sealing member 6a is provided on the center part of the surface of, for example, the lower clamping plate 2. The sealing member 6a has a first coefficient of linear expansion under the operating temperature range of the electrolysis cell stack 10. The first coefficient of linear expansion is, for example, not lower than 5 × 10⁻⁶/K nor higher than 40 × 10⁻⁶/K.

The sealing member 6b is provided around the sealing member 6a and is in contact with the lower clamping plate 2. The sealing member 6b may be provided to surround the sealing member 6a. The sealing member 6b has a second coefficient of linear expansion under the operating temperature range of the electrolysis cell stack 10. The second coefficient of linear expansion is higher than the first coefficient of linear expansion. The second coefficient of linear expansion is, for example, not lower than 10 × 10⁻⁶/K nor higher than 60 × 10⁻⁶/K.

The sealing member 6a and the sealing member 6b can be formed using a material such as ceramic, for instance. It is possible to adjust the coefficients of linear expansion of the sealing member 6a and the sealing member 6b by, for example, making the compositions of the sealing member 6a and the sealing member 6b different. FIG. 8 illustrates an example where the planar shapes of the sealing member 6a and the sealing member 6b are both square, but the planar shapes of the sealing member 6a and the sealing member 6b are not limited to the square shape and may be other shapes such as a rectangular shape or a circular shape.

Owing to the sealing members 6 with different coefficients of linear expansion arranged between the stack 1 and the lower clamping plate 2, even if the lower clamping plate 2 thermally deforms, the shape of the sealing members 6 can follow the influence of the thermal deform of the lower clamping plate 2, making it possible to prevent a gap from being formed in the electrolysis cell stack 10 due to the thermal deformation, enabling a reduction in gas leakage from the electrolysis cell stack 10.

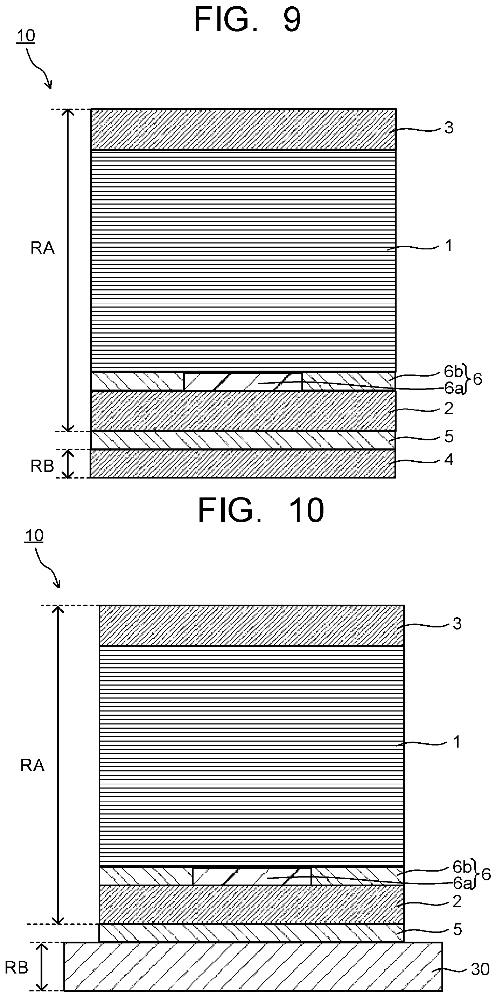

The third embodiment can be appropriately combined with the first embodiment and the second embodiment. FIG. 9 and FIG. 10 are schematic views illustrating modification examples of the third embodiment. As illustrated in FIG.9, the sealing members 6 may be arranged between the stack 1 and the lower clamping plate 2 of the electrolysis cell stack 10 illustrated in FIG. 4. As illustrated in FIG. 10, the sealing members 6 may be arranged between the stack 1 and the lower clamping plate 2 of the electrolysis cell stack 10 illustrated in FIG. 5. For the other description of the sealing members 6, the description of the sealing members 6 illustrated in FIG. 7 and FIG. 8 can be referred to as required.

### (Fourth Embodiment)

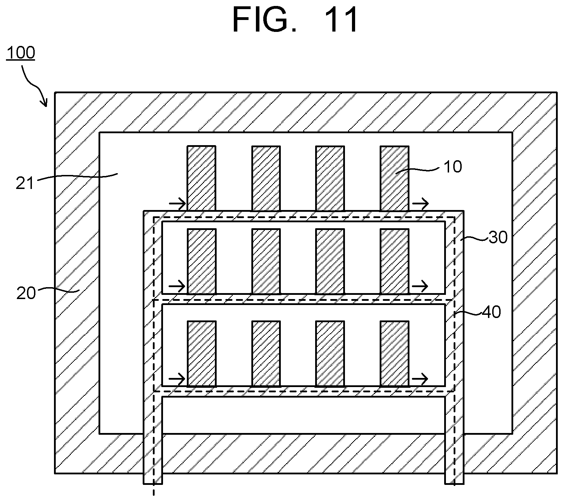

FIG. 11 is a schematic view for explaining the fourth embodiment of the electrolysis device. FIG. 11 illustrates an electrolysis device 100.

The electrolysis device 100 has electrolysis cell stacks 10, a heating furnace 20, a stand 30, and a channel 40.

FIG. 11 illustrates the electrolysis cell stacks 10. The electrolysis cell stacks 10 are arranged on at least one stand 30. The electrolysis cell stacks 10 each need to have neither the heat conduction member 5 nor the sealing members 6. For the other description of the electrolysis cell stacks 10, the descriptions in the other embodiments can be referred to as required.

The heating furnace 20 has a chamber 21 housing the electrolysis cell stacks 10. Examples of the heating furnace 20 include an electric furnace. The heating furnace 20 is capable of adjusting the temperature of the electrolysis cell stacks 10. For the other description of the heating furnace 20, the description of the heating furnace 20 illustrated in FIG. 6 can be referred to as required.

The stand 30 is arranged in the chamber 21. The stand 30 is provided to mount the electrolysis cell stacks 10 thereon.

The channel 40 is provided between the electrolysis cell stacks 10 and the stand 30 or extends inside the stand 30. The channel 40 may be connected to gas channels of the electrolysis cell stacks 10. In the channel 40, at least one of the supply gas and the discharge gas flows. The channel 40 is composed of at least one pipe. The channel 40 may have pipes so that the supply gas can be supplied to the electrolysis cell stacks 10 through one of the pipes, and the produced gas can be discharged from the electrolysis cell stacks 10 through another one of the pipes. For the other description of the stand 30, the description of the stand 30 illustrated in FIG. 6 can be referred to as required.

The supply gas and the produced gas flowing between the electrolysis cell stacks 10 and the stand 30 have high temperatures within the operating temperature range of the electrolysis cell stacks 10, for instance. Therefore, by arranging the channel 40 to make the gases flow between the electrolysis cell stacks 10 and the stand 30, it is possible to inhibit, by convection, a decrease in temperature of the end parts of the electrolysis cell stacks 10. Consequently, the formation of the temperature gradient can be reduced, making it possible to prevent a gap from being formed in the electrolysis cell stacks 10 due to thermal deformation to reduce gas leakage from the electrolysis cell stacks 10.

The fourth embodiment can be appropriately combined with any of the first to third embodiments.

In the first to fourth embodiments, the examples where the electrolysis cell stack 10 is the planar cell stack, and the electrolysis cell stack 10 is installed on the stand in the high-temperature furnace to face downward in the gravitational direction are described, but these are presented only by way of example, and in the case where the electrolysis cell stack 10 other than the planar or the electrolysis cell stack 10 is installed to face upward in the gravitational direction or installed vertically, it is also possible to obtain the same effects as those of the first to fourth embodiments as long as the end parts have the same structure. The first to fourth embodiments are effective especially when applied to an electrolysis cell stack that performs an electrolytic reaction where it is important to prevent the leakage of the produced hydrogen to the outside of the electrolysis cell stack 10.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electrochemical cell stack comprising:
a stack including electrochemical cells;
a first clamping plate provided in contact with the stack; and
a heat conduction member provided in contact with the first clamping plate,
wherein the heat conduction member is lower in heat conductivity than the first clamping plate under an operating temperature range of the electrochemical cell stack.

2. The electrochemical cell stack according to claim 1, further comprising
a second clamping plate provided in contact with the heat conduction member,
wherein the heat conduction member is arranged between the first clamping plate and the second clamping plate.

3. The electrochemical cell stack according to claim 1,
wherein the heat conduction member is a ceramic member or a mica member.

4. The electrochemical cell stack according to claim 1,
wherein the electrochemical cell stack is arranged on a stand, and
wherein the heat conduction member is arranged between the first clamping plate and the stand.

5. The electrochemical cell stack according to claim 4,
wherein the heat conduction member is a ceramic member or a mica member.

6. An electrochemical cell stack comprising:
a stack including electrochemical cells;
a first clamping plate; and
sealing members provided between the stack and the first clamping plate and having different coefficients of liner expansion.

7. The electrochemical cell stack according to claim 6,
wherein the sealing members include:
a first sealing member provided in contact with the first clamping plate and having a first coefficient of linear expansion under an operating temperature range of the electrochemical cell stack; and
a second sealing member provided around the first sealing member and in contact with the first clamping plate, and having a second coefficient of linear expansion higher than the first coefficient of linear expansion under the operating temperature range of the electrochemical cell stack.

8. An electrochemical device comprising the electrochemical cell stack according to any one of claim 1 to claim 7.

9. An electrochemical device comprising:
an electrochemical cell stack;
a heating furnace configured to house the electrochemical cell stack and adjust a temperature of the electrochemical cell stack;
a stand which provided inside the hearing furnace and on which the electrochemical cell stack is mounted; and
a channel which provided between the electrochemical cell stack and the stand and through which gas flows,
wherein, the gas between the electrochemical cell stack and the stand, has a temperature within an operating temperature range of the electrochemical cell stack.

10. The electrochemical device according to claim 9,
wherein the channel extends inside the stand.

11. The electrochemical device according to claim 9 or claim 10,
wherein the electrochemical cell stack comprises:
a stack including electrochemical cells;
a first clamping plate provided in contact with the stack; and
a heat conduction member provided in contact with the first clamping plate,
wherein the heat conduction member is lower in heat conductivity than the first clamping plate under the operating temperature range of the electrochemical cell stack.

12. The electrochemical device according to claim 11,
wherein the electrochemical cell stack further comprises a second clamping plate provided in contact with the heat conduction member, and
wherein the heat conduction member is arranged between the first clamping plate and the second clamping plate.

13. The electrochemical device according to claim 11,
wherein the heat conduction member is a ceramic member or a mica member.

14. The electrochemical device according to claim 9 or claim 10,
wherein the electrochemical cell stack comprises:
a stack including electrochemical cells;
a first clamping plate; and
sealing members provided between the stack and the first clamping plate and having different coefficients of linear expansion.

15. The electrochemical device according to claim 14,
wherein the sealing members include:
a first sealing member provided in contact with the first clamping plate and having a first coefficient of linear expansion under the operating temperature range of the electrochemical cell stack; and
a second sealing member provided around the first sealing member and in contact with the first clamping plate, and having a second coefficient of linear expansion higher than the first coefficient of linear expansion under the operating temperature range of the electrochemical cell stack.
